# FASCICULE DE BREVET EUROPEEN

(11) **EP 0 612 464 B1**
(45) Date de publication et mention de la délivrance du brevet: **16.07.1997**
(21) Numéro de dépôt: 94440013.4
(22) Date de dépôt: 24.02.1994
(51) Int. Cl.: A01B 49/06, A01B 73/00, A01B 59/04, A01C 7/20

(54) **Semoir**
Sämaschine
Seeder

(30) Priorité: 25.02.1993 FR 9302362
(43) Date de publication de la demande: 31.08.1994
(73) Titulaire: KUHN-HUARD S.A., 44110 Chateaubriant (FR)
(72) Inventeur: Girard, Jean-Pierre, F-79100 Thouars (FR); Lumineau, Christophe, F-44142 Chateaubriant (FR)
(74) Mandataire: Andres, Jean-Claude

(56) Documents cités:
- DE-A- 1 805 154
- DE-A- 3 601 354
- DE-C- 235 926
- FR-A- 2 034 125
- FR-A- 2 187 195
- FR-A- 2 342 014
- FR-A- 2 640 463
- Prospectus "Great Plains"

## Description

La présente invention concerne un semoir comportant un corps et un timon d'attelage destiné à être lié à son extrémité frontale à un véhicule tracteur au moyen d'une articulation du type rotule ou équivalent, ledit corps comportant un châssis supportant des outils ouvreurs et s'appuyant sur le sol au moyen de roues déplaçables en hauteur par rapport audit châssis au moyen d'organes de liaison, ainsi qu'une structure porteuse supportant des organes d'implantation de graines dans le sol, ledit châssis comportant un châssis avant et un châssis arrière articulés entre eux au moyen d'une articulation centrale d'axe au moins sensiblement vertical, des moyens implantés entre le chassis avant et le châssis arrière autorisant le pivotement de l'un par rapport à l'autre durant le travail, ledit châssis avant étant lié au timon d'attelage et portant lesdits outils ouvreurs, alors que ledit châssis arrière porte les organes d'implantation de graines dans le sol.

L'articulation entre le châssis arrière portant les organes d'implantation de graines dans le sol et le châssis avant portant les outils ouvreurs permet à chaque organe d'implantation de bien rester dans le sillon créé par l'outil ouvreur correspondant, notamment dans les courbes ou pour contourner un obstacle.

Il est connu dans l'état de la technique (prospectus GREAT PLAINS "3 POINT DRILLS and NO-TILL HITCHES") un semoir dont les roues, par l'intermédiaire desquelles le châssis s'appuie sur le sol, sont liées au châssis arrière. Dans ce semoir connu, il existe ainsi deux articulations entre le véhicule tracteur et les roues du semoir : l'articulation au moyen de laquelle le timon d'attelage est lié au véhicule tracteur et l'articulation centrale par l'intermédiaire de laquelle le châssis arrière est lié au châssis avant. Une telle configuration entraîne nécessairement un manque de stabilité de la machine.

Pour remédier à cela, le semoir connu comporte des organes de stabilisation agissant entre le châssis avant et le châssis arrière. Ces organes de stabilisation comportent des amortisseurs télescopiques et un ressort à lames implantés entre le châssis avant et le châssis arrière et dont l'action s'oppose fortement au pivotement du châssis arrière par rapport au châssis avant.

Il en découle que le résultat initialement recherché, c'est-à-dire le suivi par les organes d'implantation de graines dans le sol des sillons créés par les outils ouvreurs, risque de ne pas être obtenu au moins dans certaines conditions de travail.

La présente invention vise à remédier aux inconvénients de ce semoir connu.

A cet effet, le semoir selon l'invention est caractérisé en ce que les roues sont liées au châssis avant et que les moyens implantés entre le châssis avant et le châssis arrière sont des moyens de verrouillage autorisant durant le travail le libre pivotement du châssis arrière par rapport au châssis avant et supprimant ledit pivotement durant le transport.

Ainsi, dans le semoir selon l'invention, il n'existe qu'une seule articulation entre le véhicule tracteur et les roues du semoir de sorte que la stabilité de la machine durant l'utilisation est remarquable.

Du reste, le châssis arrière et les organes d'implantation de graines dans le sol qu'il porte, peuvent pivoter librement durant ce travail par rapport au châssis avant et les outils ouvreurs liés à ce dernier. Les organes d'implantation de graines dans le sol peuvent de la sorte suivre parfaitement les traces des outils ouvreurs.

Au transport enfin, les moyens de verrouillage condamnent le pivotement du châssis arrière par rapport au châssis avant, ce qui confère également une bonne stabilité à la machine durant cette phase d'utilisation.

Dans la machine selon l'invention, il est également avantageux que chaque organe d'implantation de graines dans le sol s'étende en vue de dessus au moins sensiblement à la même distance de l'articulation centrale que l'outil ouvreur correspondant.

Selon une caractéristique supplémentaire de l'invention, les organes de liaison (liant les roues au châssis) peuvent comporter des bras de roue liés au châssis avant au moyen d'une articulation d'axe au moins sensiblement horizontal et orthogonal à la direction de travail. Il sera du reste prévu au moins un organe de manoeuvre implanté entre lesdits bras de roue et le châssis avant et servant à pivoter lesdits bras de roue par rapport audit châssis avant.

Les roues servant également à participer au contrôle de la profondeur de travail, il peut être avantageux qu'une butée réglable soit implantée entre le châssis avant et l'un au moins des bras de roue en vue de définir la position basse de travail du corps de la machine.

Selon une autre caractéristique supplémentaire de l'invention, les roues peuvent être implantées entre les outils ouvreurs et les organes d'implantation de graines dans le sol. On évitera ainsi que les roues ne roulent sur les bandes de terre ensemencées.

Selon une caractéristique supplémentaire de l'invention, les moyens de verrouillage peuvent supprimer automatiquement le pivotement du châssis arrière par rapport au châssis avant durant la mise en position de transport du corps de la machine.

Selon une caractéristique additionnelle de l'invention, les moyens de verrouillage peuvent également libérer automatiquement le pivotement du châssis arrière par rapport au châssis avant durant la mise en position de travail du corps de la machine.

Cette suppression et cette libération automatiques du pivotement du châssis arrière par rapport au châssis avant durant la mise en position de transport et en position de travail faciliteront substantiellement l'utilisation de la machine.

Dans une réalisation particulièrement avantageuse, il peut être prévu qu'entre les bras de roue soit implantée une traverse tournant conjointement avec ces derniers lors de leur pivotement durant les phases de mise en position de transport ou de travail du corps du semoir. Dans cette réalisation, les moyens de verrouillage pourront comporter des organes de verrouillage et des butées, les organes de verrouillage étant implantés sur cette traverse et destinés à venir en contact avec les butées implantées sur le châssis arrière lors de la mise du corps en position de transport.

Avantageusement, il sera prévu que lesdites butées prévues sur le châssis arrière soient réglables.

Selon une autre caractéristique supplémentaire de l'invention, le châssis avant peut être lié au timon d'attelage au moyen d'une articulation d'axe au moins sensiblement horizontal et orthogonal à la direction de travail. Un organe de commande sera prévu, qui commandera le pivotement du châssis avant par rapport au timon d'attelage autorisé par ladite articulation. Il sera ainsi possible de bien faire pénétrer les outils ouvreurs dans le sol. Il sera du reste possible de relever le châssis avant de sorte que celui-ci demeure au moins sensiblement parallèle au sol.

Dans une solution avantageuse, l'organe de commande sera implanté entre le timon d'attelage et la traverse s'étendant entre les bras de roues de sorte à relever l'avant du châssis avant lorsque l'arrière de ce dernier sera relevé au moyen des roues et inversement abaisser l'avant du châssis avant lorsque l'arrière de ce dernier sera abaissé à l'aide desdites roues.

Un châssis avant relativement compact peut être obtenu lorsque celui-ci comporte un bâti auquel est fixée une poutre s'étendant horizontalement et orthogonalement à la direction de travail. C'est à cette poutre que seront fixés les outils ouvreurs.

Il peut être avantageusement prévu que les outils ouvreurs soient des disques ouvreurs, chacun lié à un bras qui sera lié à ladite poutre au moyen d'une console correspondante. Entre ledit bras et la console sera implanté un ressort tendant à maintenir le disque ouvreur correspondant dans sa position basse. Au travail, lorsque le disque ouvreur rencontre un obstacle enfoui dans le sol, il roulera par-dessus ledit obstacle et sera ensuite rappuyé dans le sol à l'aide du ressort.

De plus, si les consoles sont identiques et qu'une sur deux soit fixée à la poutre dans un sens opposé au sens de travail, un disque ouvreur sur deux sera décalé suivant la direction de travail. Grâce à cette disposition, les disques ouvreurs seront peu sensibles aux résidus végétaux recouvrant le sol.

Du reste, chaque console peut être fixée à la poutre de manière amovible et de sorte que sa position puisse être modifiée suivant l'axe longitudinal de ladite poutre.

Selon une autre caractéristique supplémentaire de l'invention, il peut être prévu que la structure porteuse liée au châssis arrière comporte des dispositifs de liaison guidant chacun un organe d'implantation de sorte que chaque organe d'implantation puisse se déplacer en hauteur indépendamment des autres organes d'implantation.

Cette structure porteuse peut comporter en sus une structure d'attelage avec un point d'attelage supérieur et avec deux points d'attelage inférieurs. C'est au moyen des ces trois points d'attelage que la structure porteuse sera liée de manière amovible au châssis arrière.

Par ailleurs, il peut être prévu que la structure porteuse puisse être pivotée, par rapport au châssis arrière, autour des points d'attelage inférieurs au moyen d'un dispositif de réglage.

Ce dispositif de réglage pourra être un dispositif à vis et écrous s'étendant entre le point d'attelage supérieur de ladite structure porteuse et le châssis arrière.

Selon une autre caractéristique supplémentaire de l'invention, il peut aussi être prévu que la structure porteuse comporte un longeron s'étendant horizontalement et orthogonalement à la direction de travail et auquel sera lié chaque dispositif de liaison au moyen d'une console correspondante.

Ces consoles seront avantageusement identiques et une sur deux sera fixée au longeron dans un sens opposé au sens de travail de sorte qu'un organe d'implantation sur deux soit décalé suivant la direction de travail. Grâce à cette disposition les organes d'implantation seront peu sensibles aux résidus végétaux recouvrant le sol.

En sus, chaque console pourra être fixée au longeron de manière amovible et de sorte que sa position puisse être modifiée suivant l'axe longitudinal dudit longeron.

Selon une autre caractéristique supplémentaire de l'invention, il peut être prévu que chaque dispositif de liaison comporte au moins sensiblement un parallélogramme déformable vers le haut.

Grâce à cette caractéristique, l'angle d'implantation des graines dans le sol sera au moins sensiblement constant quelle que soit la profondeur d'implantation.

En sus, chaque dispositif de liaison pourra être muni d'un élément élastiquement déformable tendant à ramener l'organe d'implantation correspondant vers sa position basse.

Préférentiellement, il sera prévu que l'action de chaque élément élastiquement déformable sur l'organe d'implantation correspondant soit au moins sensiblement constante quel que soit le déplacement en hauteur dudit organe d'implantation. De ce fait, la profondeur de travail peut être modifiée en déplaçant uniquement les roues en hauteur.

Pour ce faire, il sera prévu que l'action de chaque élément élastiquement déformable s'applique au moins sensiblement horizontalement.

En outre, il pourra être prévu que l'action des éléments élastiquement déformables soit modulée au moyen d'un dispositif central de réglage.

A cet effet, l'élément élastiquement déformable pourra être un ressort lié à l'une de ses extrémités directement ou indirectement à une barre centrale de réglage susceptible d'être translatée au moins sensiblement suivant la direction de travail.

Il pourra également être prévu que l'action de chaque élément élastiquement déformable soit modulée initialement au moyen d'un dispositif de réglage individuel.

Une réalisation simple et compacte sera obtenue lorsque chaque élément élastiquement déformable est un ressort de traction.

Selon une caractéristique supplémentaire de l'invention, il peut encore être prévu que chaque organe d'implantation comporte deux disques semeurs placés en "V" ouvert vers l'arrière et que les graines soient déposées entre lesdits disques semeurs au moyen d'un tuyau.

D'autres caractéristiques de l'invention apparaissent dans la description suivante d'un exemple non limitatif de réalisation, faite en référence au dessin annexé sur lequel:
- la figure 1 représente une vue latérale d'un semoir selon l'invention lié à un véhicule moteur,
- la figure 2 représente une vue de dessus partielle du semoir de la figure 1,
- la figure 3 représente, à une échelle agrandie, une coupe selon le plan III-III de la figure 2 montrant les organes de verrouillage.

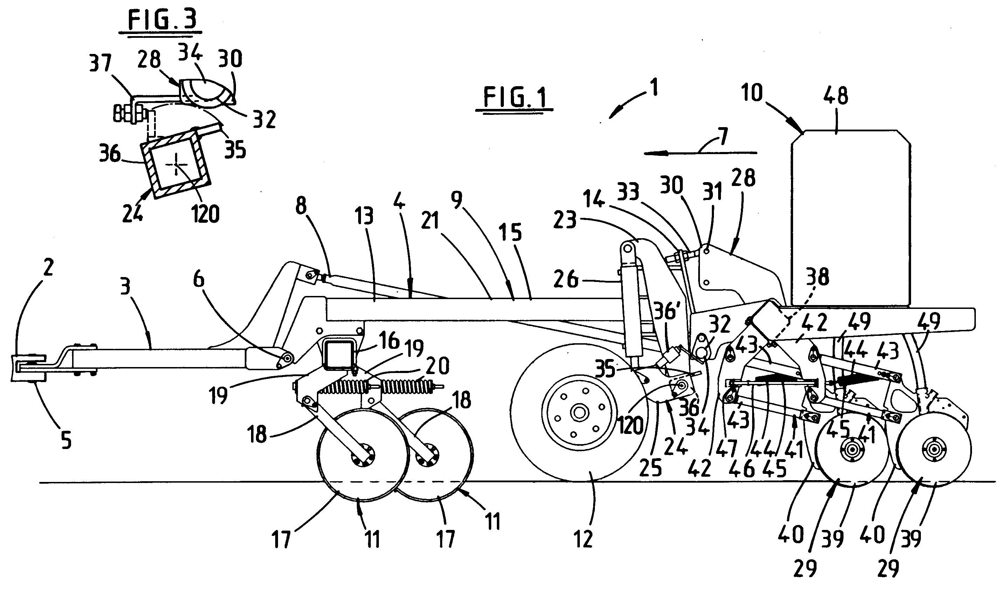

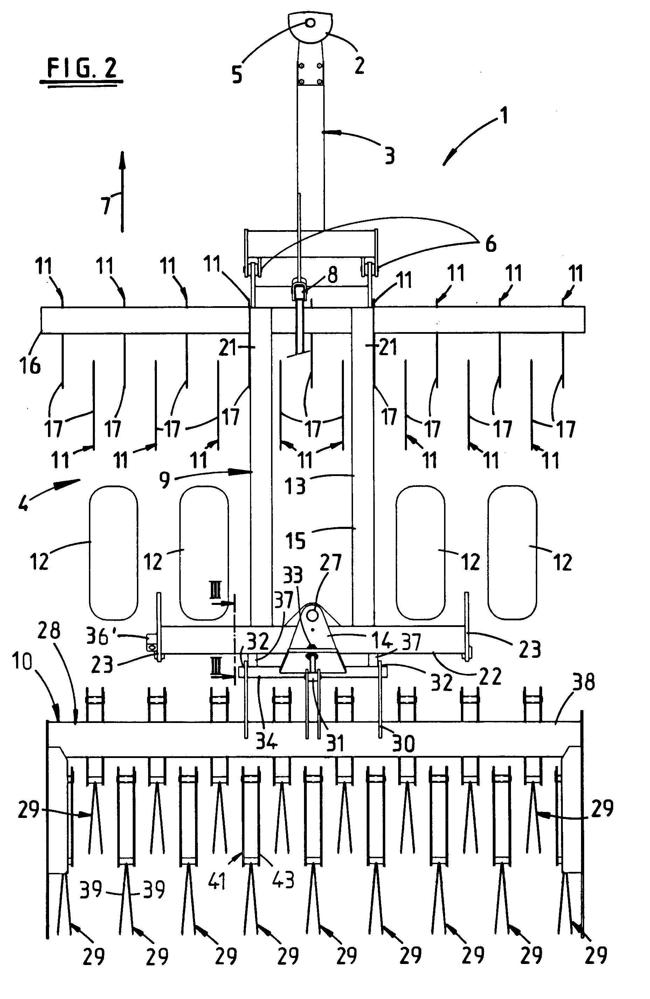

Sur les figures 1 à 3 est représenté un semoir (1) selon l'invention. Dans les figures 1 et 2, celui-ci est montré en situation d'utilisation, c'est-à-dire lié à l'arrière d'un tracteur agricole (2).

Le semoir (1) comporte un timon d'attelage (3) et un corps (4). Le timon d'attelage (3) est destiné à être lié, à son extrémité frontale, au tracteur agricole (2) au moyen d'une articulation (5) du type rotule ou équivalent. A son extrémité arrière, le timon d'attelage (3) est lié au corps (4) à l'aide d'une articulation (6) présentant un axe au moins sensiblement horizontal et orthogonal à la direction de travail (7), de sorte à pouvoir être pivoté autour de l'axe de l'articulation (6) sous l'action d'un organe de commande (8) implanté entre ledit timon d'attelage (3) et le corps (4). Cet organe de commande (8) sera décrit plus en détail ultérieurement.

Le corps (4), quant-à-lui, comporte un châssis (9) et un dispositif de semis (10). Le châssis (9) supporte des outils ouvreurs (11) et s'appuie sur le sol au moyen de roues (12). Tel que visible sur les figures 1 et 2, le châssis (9) se compose d'un châssis avant (13) lié au timon d'attelage (3) et portant lesdits outils ouvreurs (11), et d'un châssis arrière (14).

Le châssis avant (13) comprend un bâti (15) auquel est fixée une poutre (16) horizontale s'étendant orthogonalement à la direction de travail (7). C'est cette poutre (16) qui porte les outils ouvreurs (11). Dans l'exemple représenté, les outils ouvreurs (11) sont des disques ouvreurs (17) chacun lié à un bras (18) qui est lui-même lié à ladite poutre (16) au moyen d'une console correspondante (19). Par ailleurs, entre chaque bras (18) et la console (19) correspondante est implanté un ressort respectif (20) tendant à faire pénétrer chaque disque ouvreur (17) dans le sol. Les consoles (19) sont identiques entre elles et une console (19) sur deux est fixée à la poutre (16) dans un sens opposé au sens de travail (7), de sorte qu'un disque ouvreur (17) sur deux soit décalé suivant la direction de travail (7). Ces disques ouvreurs (17) ont pour fonction d'ouvrir des sillons dans le sol. Etant donné qu'à chaque disque ouvreur (17) est associé un ressort (20), chaque disque ouvreur (17) peut s'escamoter individuellement lorsqu'il rencontre un obstacle enfoui dans le sol. De plus, chaque console (19) est fixée à la poutre (16) de manière aisément amovible et de sorte que la position de chaque console (19) puisse être modifiée suivant l'axe longitudinal de ladite poutre (16). Un tel agencement permet de modifier la distance séparant latéralement deux disques ouvreurs (17) adjacents et d'ajouter ou de retirer facilement des disques ouvreurs (17).

Le bâti (15) du châssis avant (13) comporte deux poutres centrales (21) fixées à leur extrémité frontale à la poutre (16) et s'étendant vers l'arrière suivant la direction de travail (7). A leur extrémité arrière, les deux poutres centrales (21) sont fixées à une poutre arrière (22) du bâti (15) dirigée au moins sensiblement orthogonalement à la direction de travail (7). A chaque extrémité longitudinale de cette poutre arrière (22), le bâti (15) comporte en sus une paroi latérale (23) respective s'étendant dans un plan vertical.

Au châssis avant (13) sont encore liées les roues (12) au moyen d'organes de liaison (24) autorisant le déplacement en hauteur desdites roues (12) par rapport audit châssis avant (13). Ces organes de liaison (24) comportent deux bras de roues (25) liés chacun à l'extrémité inférieure de la paroi latérale (23) respective du bâti (15) au moyen d'une articulation (120) d'axe au moins sensiblement horizontal et orthogonal à la direction de travail (7). Entre chaque bras de roue (25) et l'extrémité supérieure de la paroi latérale (23) du bâti (15) est en sus implanté un vérin de manoeuvre (26) respectif. Les vérins de manoeuvre (26) permettent de déplacer le châssis avant (13) en hauteur et de le maintenir dans la position choisie. Avantageusement, une traverse (36) dont l'axe longitudinal est sensiblement confondu avec l'axe de l'articulation (120), s'étend entre les deux bras de roue (25) auxquels elle est fixée. L'organe de commande (8) est articulé, à son extrémité arrière, sur cette traverse (36). Ainsi, en rapprochant le châssis avant (13) du sol, la traverse (36) tire, durant sa rotation, sur l'organe de commande (8) qui s'étend entre ladite traverse (36) et le timon d'attelage (3), lequel organe de commande (8) tend à pivoter le timon d'attelage (3) vers le haut autour de l'articulation (6). Mais, comme l'extrémité avant du timon d'attelage (3) est lié au tracteur (2), il en résulte que l'extrémité arrière du timon d'attelage (3) appuie sur la poutre (16), ce qui fait pénétrer plus facilement les disques ouvreurs (17) dans le sol. Sur l'une au moins des parois latérales (23) du châssis avant (13) est en sus implantée une butée réglable (36') de la profondeur de travail. Cette butée réglable (36') est destinée à limiter le pivotement vers le haut du bras de roue (25) correspondant en fonction de la profondeur de travail désirée.

Le châssis arrière (14), quant à lui, est lié à l'arrière du châssis avant (13) au moyen d'une articulation centrale (27) d'axe sensiblement vertical. Au châssis arrière (14) est lié le dispositif de semis (10). Le dispositif de semis (10) comporte à cet effet une structure porteuse (28) supportant des organes d'implantation (29) des graines dans le sol. La structure porteuse (28) comporte, à sa partie frontale, une structure d'attelage (30) avec un point d'attelage supérieur (31) et avec deux points d'attelage inférieurs (32). Cette structure d'attelage (30) est une structure d'attelage standard permettant, si cela est souhaité, de désaccoupler le dispositif de semis (10) du châssis arrière (14) et de lier directement le dispositif de semis (10) à l'attelage trois points d'un tracteur. Pour fixer la structure d'attelage (30) de la structure porteuse (28) au châssis arrière (14), le châssis arrière (14) comporte un dispositif de réglage à vis et écrous (33) lié au point d'attelage supérieur (31) et une barre de guidage (34) dont les extrémités sont articulées dans les points d'attelage inférieurs (32) de la structure d'attelage (30).

De ce fait, en agissant sur le dispositif de réglage à vis et écrous (33), le dispositif de semis (10) peut être pivoté avec précision par rapport au châssis arrière (14) autour des deux points d'attelage inférieurs (32).

Par ailleurs, le pivotement du châssis arrière (14) et du dispositif de semis (10) par rapport au châssis avant (13) autour de l'axe de l'articulation centrale (27) est libre au travail. Par contre, au transport, ce pivotement est verrouillé automatiquement lors du relevage du châssis avant (13), donc du corps (4), à l'aide de moyens de verrouillage comportant des organes de verrouillage (35) et des butées (37). Ces organes de verrouillage (35) sont fixés sur la traverse (36) des bras de roues (25) et sont destinés à venir en contact avec les butées réglables (37) correspondantes fixées à la barre de guidage (34), donc au châssis arrière (14), dans le voisinage des extrémités longitudinales de ladite barre de guidage (34). Ainsi, en allongeant les vérins de manoeuvre (26), c'est-à-dire en éloignant le corps (4) du sol, les bras de roue (25) et la traverse (36) pivotent autour de l'axe de l'articulation (120). En fin de pivotement, les organes de verrouillage (35) viennent en contact avec les butées (37) fixées à la barre de de guidage (34), empêchant ainsi tout pivotement de ladite barre de guidage (34) et, de ce fait, du châssis arrière (14) et du dispositif de semis (10) qui y est lié, autour de l'axe de l'articulation centrale (27). Grâce à cet agencement, le dispositif de semis (10) ne peut donc pas pivoter au transport. Il convient du reste de noter que ces moyens de verrouillage (35, 37) libèrent automatiquement ce pivotement lors de la mise en position de travail. En approchant en effet le corps (4) du sol à l'aide des vérins de manoeuvre (26), la traverse (36) et les organes de verrouillage (35) qui y sont fixés, s'éloignent des butées (37).

La structure porteuse (28) comporte un longeron (38) s'étendant au moins sensiblement horizontalement et orthogonalement à la direction de travail (7). C'est ce longeron (38) qui porte les organes d'implantation (29). Chaque organe d'implantation (29) comporte deux disques semeurs (39) placés en V ouvert vers l'arrière et un support (40) supportant les disques semeurs (39) de manière rotative. Chaque organe d'implantation (29) est lié au longeron (38) au moyen d'un dispositif de liaison (41) et d'une console (42). D'une manière similaire aux consoles (19) supportant les disques ouvreurs (17), une console (42) sur deux est fixée au longeron (38) dans un sens opposé au sens de travail (7), de sorte qu'un organe d'implantation (29) sur deux soit décalé suivant la direction de travail (7). De plus, les consoles (42) sont également identiques entre elles. Chaque console (42) est du reste également fixée au longeron (38) de manière aisément amovible et de sorte que la position de chaque console (42) puisse être modifiée suivant l'axe longitudinal dudit longeron (38). Un tel agencement permet de modifier la distance séparant latéralement deux organes d'implantation (29) adjacents et d'ajouter ou de retirer facilement des organes d'implantation (29). Sur les figures 1 et 2, il apparaît aussi que chaque outil ouvreur (11) et son organe d'implantation (29) correspondant s'étendent au moins sensiblement dans le prolongement l'un de l'autre et, suivant la direction de travail (7), au moins sensiblement à la même distance de l'articulation centrale (27).

Grâce à un tel agencement, chaque organe d'implantation (29) se déplace toujours dans le sillon créé par l'outil ouvreur (11) correspondant, ceci en ligne droite et dans les virages. En outre, les roues (12) s'étendent entre les outils ouvreurs (11) et les organes d'implantation (29). De ce fait, les roues (12) ne roulent pas sur les bandes de terre déjà ensemencées à l'aide des organes d'implantation (29).

Comme dit précédemment, chaque organe d'implantation (29) est lié à la console (42) correspondante au moyen d'un dispositif de liaison (41). Ce dispositif de liaison (41) comporte deux bielles (43) de sorte à former au moins sensiblement un parallélogramme déformable vers le haut. Ces bielles (43) sont implantées plus précisément entre le support (40) de l'organe d'implantation (29) et la console (42). Compte tenu du fait que chaque organe d'implantation (29) peut se déplacer en hauteur au moyen d'un parallélogramme déformable, l'angle d'implantation des graines dans le sol reste constant, quelle que soit la profondeur d'implantation ou lorsque les roues (12) passent sur un obstacle. De plus, chaque dispositif de liaison (41) est muni d'un élément élastiquement déformable (44) tendant à conserver l'organe d'implantation (29) au fond du sillon. Dans l'exemple décrit, chaque élément élastiquement déformable (44) est un ressort cylindrique de traction (45) implanté sensiblement parallèlement à la direction de travail (7). De ce fait, quelle que soit la position en hauteur de l'organe d'implantation (29), l'action du ressort de traction (45) agissant sur le parallélogramme déformable est au moins sensiblement constante. Chaque ressort de traction (45) est en outre implanté dans le parallélogramme correspondant et lié, par l'intermédiaire d'un tirant (46), à une barre centrale de réglage (47). Un ressort de traction (45) d'un organe d'implantation (29) arrière est lié à la barre centrale de réglage (47) au moyen d'un tirant (46) long, tandis qu'un ressort de traction (45) d'un organe d'implantation (29) avant est lié à ladite barre centrale de réglage (47) au moyen d'un tirant (46) court. La barre centrale de réglage (47) est guidée en translation dans les consoles (42) avant et quelques vis (non représentées) permettent de translater ladite barre centrale de réglage (47) vers l'avant ou vers l'arrière. Du reste, on peut encore constater sur la figure 1 que chaque tirant (46) long est guidé dans la console (42) correspondante.

Le dispositif de semis (10) comporte également une trémie (48) fixée sur la structure porteuse (28). Les graines qui y sont contenues sont acheminées jusqu'entre les disques semeurs (39) de chaque organe d'implantation (29) au moyen d'un tuyau flexible (49) correspondant. Les graines sont dosées par un doseur (non représenté) animé par une roue d'entraînement (non représentée).

Le semoir selon l'invention présente également les avantages suivants:

Etant donné que les roues (12) sont liées au châssis avant (13), le châssis arrière (14) et le dispositif de semis (10) qui y est attelé, peuvent pivoter librement durant le travail autour de l'axe de l'articulation centrale (27). Ce faisant, les organes d'implantation (29) suivent avec beaucoup de précision les sillons créés préalablement dans le sol par les disques ouvreurs (17).

Au transport, les moyens de verrouillage (35, 37) maintiennent solidement le dispositif de semis (10) dans sa position médiane, évitant ainsi tout pivotement du dispositif de semis (10) autour de l'axe de l'articulation centrale (27). Il convient de rappeler que la condamnation, respectivement la libération du pivotement du dispositif de semis (10) autour de l'axe de l'articulation centrale (27) se font automatiquement lors du relevage, respectivement de l'abaissement du corps (4).

Comme le dispositif de semis (10) est fixé de manière amovible au châssis (9), le dispositif de semis (10) et le châssis (9) peuvent être désaccouplés pour faciliter leur transport par camion par exemple ou le dispositif de semis (10) peut être utilisé en solo.

Compte tenu du fait que le dispositif de liaison (41) comporte au moins sensiblement un parallélogramme déformable, l'angle d'implantation préréglé de l'organe d'implantation (29) reste au moins sensiblement constant, quelle que soit la profondeur d'implantation des graines dans le sol.

D'autre part, le dispositif de réglage (33) permet un réglage centralisé de cet angle d'implantation.

Etant donné que l'élément élastiquement déformable (44) s'étend au moins sensiblement horizontalement, l'action de celui-ci sur l'organe d'implantation (29) correspondant reste au moins sensiblement constante, quelle que soit la profondeur d'implantation.

De plus, la barre centrale de réglage (47) permet un réglage centralisé de l'effort exercé par chaque élément élastiquement déformable (44) sur l'organe d'implantation (29) correspondant.

De surcroît, chaque tirant (46) est lié à la barre centrale de réglage (47) au moyen d'un dispositif à vis et écrous autorisant un réglage initial précis de l'effort exercé par chaque élément élastiquement déformable (44) sur l'organe d'implantation (29) correspondant.

Il y a enfin lieu de noter que différentes modifications restent possibles, notamment en ce qui concerne la constitution des divers éléments ou par substitution d'équivalents techniques, sans pour autant sortir du domaine de protection défini par les revendications.

## Revendications

1. Semoir (1) comportant un corps (4) et un timon d'attelage (3) destiné à être lié à son extrémité frontale à un véhicule tracteur (2) au moyen d'une articulation (5) du type rotule ou équivalent, ledit corps (4) comportant un châssis (9) supportant des outils ouvreurs (11) et s'appuyant sur le sol au moyen de roues (12) déplaçables en hauteur par rapport audit châssis (9) au moyen d'organes de liaison (24), ainsi qu'une structure porteuse (28) supportant des organes d'implantation (29) des graines dans le sol, ledit châssis (9) comportant un châssis avant (13) et un châssis arrière (14) articulés entre eux au moyen d'une articulation centrale (27) d'axe au moins sensiblement vertical, des moyens (35, 37) implantés entre le châssis avant (13) et le châssis arrière (14) autorisant le pivotement de l'un par rapport à l'autre durant le travail, ledit châssis avant (13) étant lié au timon d'attelage (3) et portant lesdits outils ouvreurs (11), alors que ledit châssis arrière (14) porte les organes d'implantation (29) de graines dans le sol, caractérisé en ce que les roues (12) sont liées au châssis avant (13) et que les moyens (35, 37) implantés entre le châssis avant (13) et le châssis arrière (14) sont des moyens de verrouillage (35, 37) autorisant durant le travail le libre pivotement du châssis arrière (14) par rapport au châssis avant (13) et supprimant ledit pivotement durant le transport.

2. Semoir selon la revendication 1, caractérisé en ce que chaque organe d'implantation (29) s'étend en vue de dessus au moins sensiblement à la même distance de l'articulation centrale (27) que l'outil ouvreur (11) correspondant.

3. Semoir selon la revendication 1 ou 2, caractérisé en ce que les organes de liaison (24) comportent des bras de roue (25) liés au châssis avant (13) au moyen d'une articulation (120) d'axe au moins sensiblement horizontal et orthogonal à la direction de travail (7), ainsi qu'au moins un organe de manoeuvre (26) implanté entre lesdits bras de roue (25) et le châssis avant (13) et servant à pivoter lesdits bras de roue (25) par rapport audit châssis avant (13).

4. Semoir selon l'une au moins des revendications 1 à 3, caractérisé en ce qu'une butée réglable (36') est implantée entre le châssis avant (13) et l'un au moins des bras de roue (25) en vue de définir la position basse de travail du corps (4).

5. Semoir selon l'une au moins des revendications 1 à 4, caractérisé en ce que les roues (12) sont implantées entre les outils ouvreurs (11) et les organes (29) d'implantation de graines dans le sol.

6. Semoir selon l'une au moins des revendications 1 à 5, caractérisé en ce que les moyens de verrouillage (35, 37) suppriment automatiquement le pivotement du châssis arrière (14) par rapport au châssis avant (13) durant la mise en position de transport du corps (4).

7. Semoir selon l'une au moins des revendications 1 à 6, caractérisé en ce que les moyens de verrouillage (35, 37) libèrent automatiquement le pivotement du châssis arrière (14) par rapport au châssis avant (13) durant la mise en position de travail du corps (4).

8. Semoir selon l'une des revendications 6 ou 7 combinée avec la revendication 3, caractérisé en ce que entre les bras de roue (25) est implantée une traverse (36) tournant conjointement avec ces derniers lors de leur pivotement autour de l'axe de l'articulation (120) liant les bras de roue (25) au châssis avant (13), que les moyens de verrouillage (35, 37) comportent des organes de verrouillage (35) et des butées (37), et que les organes de verrouillage (35) sont implantés sur ladite traverse (36) et sont destinés à venir en contact avec les butées (37) implantées sur le châssis arrière (14) lors de la mise du corps (4) en position de transport.

9. Semoir selon la revendication 8, caractérisé en ce que lesdites butées (37) sont réglables.

10. Semoir selon l'une au moins des revendications 1 à 9, caractérisé en ce que le châssis avant (13) est lié au timon d'attelage (3) au moyen d'une articulation (6) d'axe au moins sensiblement horizontal et orthogonal à la direction de travail (7) et qu'un organe de commande (8) commande le pivotement du châssis avant (13) par rapport au timon d'attelage (3) autorisé par ladite articulation (6).

11. Semoir selon la revendication 10 et la revendication 8 ou 9, caractérisé en ce que l'organe de commande (8) est implanté entre le timon d'attelage (3) et la traverse (36) de sorte à relever l'avant du châssis avant (13) lorsque l'arrière de ce dernier est relevé au moyen des roues (12) et inversement abaisser l'avant du châssis avant (13) lorsque l'arrière de ce dernier est abaissé à l'aide desdites roues (12).

12. Semoir selon l'une au moins des revendications 1 à 11, caractérisé en ce que le châssis avant (13) comporte un bâti (15) auquel est fixée une poutre (16) s'étendant horizontalement et orthogonalement à la direction de travail (7), et que cette poutre (16) porte lesdits outils ouvreurs (11).

13. Semoir selon la revendication 12, caractérisé en ce que les outils ouvreurs (11) sont des disques ouvreurs (17) chacun lié à un bras (18) qui est lié à ladite poutre (16) au moyen d'une console correspondante (19), et qu'entre ledit bras (18) et la console (19) de chaque disque ouvreur (17) est implanté un ressort (20) tendant à maintenir le disque ouvreur (17) correspondant dans sa position basse.

14. Semoir selon la revendication 13, caractérisé en ce que les consoles (19) sont identiques et qu'une sur deux est fixée à la poutre (16) dans un sens opposé au sens de travail (7) de sorte qu'un disque ouvreur (17) sur deux soit décalé suivant la direction de travail (7).

15. Semoir selon la revendication 13 ou 14, caractérisé en ce que chaque console (19) est fixée à la poutre (16) de manière amovible et de sorte que sa position puisse être modifiée suivant l'axe longitudinal de ladite poutre (16).

16. Semoir selon l'une au moins des revendications 1 à 15, caractérisé en ce que la structure porteuse (28), liée au châssis arrière (14), comporte des dispositifs de liaison (41) guidant chacun un organe d'implantation (29) de sorte que chaque organe d'implantation (29) puisse se déplacer en hauteur indépendamment des autres.

17. Semoir selon la revendication 16, caractérisé en ce que la structure porteuse (28) comporte une structure d'attelage (30) avec un point d'attelage supérieur (31) et avec deux points d'attelage inférieurs (32) au moyen desquels elle est liée au châssis arrière (14).

18. Semoir selon la revendication 17, caractérisé en ce que la structure porteuse (28) peut être pivotée, par rapport au châssis arrière (14), autour desdits points d'attelage inférieurs (32) au moyen d'un dispositif de réglage (33).

19. Semoir selon la revendication 18, caractérisé en ce que le dispositif de réglage (33) est un dispositif à vis et écrous s'étendant entre le point d'attelage supérieur (31) de ladite structure porteuse (28) et le châssis arrière (14).

20. Semoir selon l'une au moins des revendications 16 à 19, caractérisé en ce que la structure porteuse (28) comporte un longeron (38) s'étendant horizontalement et orthogonalement à la direction de travail (7) et auquel est lié chaque dispositif de liaison (41) au moyen d'une console (42) correspondante.

21. Semoir selon la revendication 20, caractérisé en ce que lesdites consoles (42) sont identiques et qu'une sur deux est fixée au longeron (38) dans un sens opposé au sens de travail (7) de sorte qu'un organe d'implantation (29) sur deux soit décalé suivant la direction de travail (7).

22. Semoir selon la revendication 20 ou 21, caractérisé en ce que chaque console (42) est fixée au longeron (38) de manière amovible et de sorte que sa position puisse être modifiée suivant l'axe longitudinal dudit longeron (38).

23. Semoir selon l'une au moins des revendications 16 à 22, caractérisé en ce que chaque dispositif de liaison (41) comporte au moins sensiblement un parallélogramme déformable vers le haut.

24. Semoir selon l'une au moins des revendications 16 à 23, caractérisé en ce que chaque dispositif de liaison (41) est muni d'un élément élastiquement déformable (44) tendant à ramener l'organe d'implantation (29) correspondant vers sa position basse.

25. Semoir selon la revendication 24, caractérisé en ce que l'action de chaque élément élastiquement déformable (44) sur l'organe d'implantation (29) correspondant est au moins sensiblement constante quel que soit le déplacement en hauteur dudit organe d'implantation (29).

26. Semoir selon la revendication 25, caractérisé en ce que l'action de chaque élément élastiquement déformable (44) s'applique au moins sensiblement horizontalement.

27. Semoir selon l'une au moins des revendications 24 à 26, caractérisé en ce que l'action des éléments élastiquement déformables (44) est modulée au moyen d'un dispositif central de réglage (47).

28. Semoir selon la revendication 27, caractérisé en ce que chaque élément élastiquement déformable (44) est un ressort (45) lié à l'une des ses extrémités directement ou indirectement à une barre centrale de réglage (47) pouvant être translatée au moins sensiblement suivant la direction de travail (7).

29. Semoir selon l'une au moins des revendications 24 à 28, caractérisé en ce que l'action de chaque élément élastiquement déformable (44) est modulée initialement au moyen d'un dispositif de réglage individuel.

30. Semoir selon l'une au moins des revendications 24 à 29, caractérisé en ce que chaque élément élastiquement déformable (44) est un ressort de traction (45).

31. Semoir selon l'une au moins des revendications 1 à 30, caractérisé en ce que chaque organe d'implantation (29) comporte deux disques semeurs (39) placés en "V" ouvert vers l'arrière et que les graines sont déposées entre lesdits disques semeurs (39) au moyen d'un tuyau (49).

## Claims

1. Seeder (1) including a body (4) and a hitching drawbar (3) intended to be connected at its front end to a tractor vehicle (2) by means of an articulation (5) of the ball or equivalent type, the said body (4) including a chassis (9) supporting opening implements (11) and resting on the ground by means of wheels (12) which can be moved heightwise with respect to the said chassis (9) by means of connecting members (24), as well as a carrying structure (28) supporting members (29) for planting seeds in the ground, the said chassis (9) including a front chassis (13) and a rear chassis (14) which are articulated together by means of a central articulation (27) of at least substantially vertical axis, means (35, 37) fitted between the front chassis (13) and the rear chassis (14) allowing one to pivot with respect to the other during work, the said front chassis (13) being connected to the hitching drawbar (3) and carrying the said opening implements (11), while the said rear chassis (14) carries the members (29) for planting seeds in the ground, ***characterized in*** that the wheels (12) are connected to the front chassis (13) and that the means (35, 37) fitted between the front chassis (13) and the rear chassis (14) are locking means (35, 37) which during work allow the rear chassis (14) to pivot freely with respect to the front chassis (13) and prevent the said pivoting during transport.

2. Seeder according to Claim 1, ***characterized in*** that each planting member (29), viewed from above, extends at least substantially the same distance away from the central articulation (27) as the corresponding opening implement (11).

3. Seeder according to Claim 1 or 2, ***characterized in*** that the connecting members (24) include wheel arms (25) connected to the front chassis (13) by means of an articulation (120) the axis of which is at least substantially horizontal and orthogonal to the direction of work (7), as well as at least one operating member (26) fitted between the said wheel arms (25) and the front chassis (13) and serving to pivot the said wheel arms (25) with respect to the said front chassis (13).

4. Seeder according to at least one of Claims 1 to 3, ***characterized in*** that an adjustable stop (36') is fitted between the front chassis (13) and at least one of the wheel arms (25) for the purpose of defining the lowermost work position of the body (4).

5. Seeder according to at least one of Claims 1 to 4, ***characterized in*** that the wheels (12) are fitted between the opening implements (11) and the members (29) for planting seeds in the ground.

6. Seeder according to at least one of Claims 1 to 5, ***characterized in*** that the locking means (35, 37) automatically prevent the rear chassis (14) from pivoting with respect to the front chassis (13) while the body (4) is being brought into the transport position.

7. Seeder according to at least one of Claims 1 to 6, ***characterized in*** that the locking means (35, 37) automatically allow the rear chassis (14) to pivot with respect to the front chassis (13) while the body (4) is being brought into the work position.

8. Seeder according to either of Claims 6 or 7, combined with Claim 3, ***characterized in*** that fitted between the wheel arms (25) is a crossmember (36) which turns together with these arms as they pivot about the axis of the articulation (120) connecting the wheel arms (25) to the front chassis (13), in that the locking means (35, 37) include locking members (35) and stops (37), and in that the locking members (35) are fitted on the said crossmember (36) and are intended to come into contact with the stops (37) fitted on the rear chassis (14) as the body (4) is brought into the transport position.

9. Seeder according to Claim 8, ***characterized in*** that the said stops (37) are adjustable.

10. Seeder according to at least one of Claims 1 to 9, ***characterized in*** that the front chassis (13) is connected to the hitching drawbar (3) by means of an articulation (6) the axis of which is at least substantially horizontal and orthogonal to the direction of work (7), and in that a control member (8) controls the pivoting of the front chassis (13) with respect to the hitching drawbar (3) allowed by the said articulation (6).

11. Seeder according to Claim 10 and either of Claims 8 or 9, ***characterized in*** that the control member (8) is fitted between the hitching drawbar (3) and the crossmember (36) so as to raise the front of the front chassis (13) when the rear of the latter is raised by means of the wheels (12) and conversely to lower the front of the front chassis (13) when the rear of the latter is lowered by means of the said wheels (12).

12. Seeder according to at least one of Claims 1 to 11, ***characterized in*** that the front chassis (13) includes a frame (15) to which there is fixed a beam (16) extending horizontally and orthogonally to the direction of work (7), and in that this beam (16) carries the said opening implements (11).

13. Seeder according to Claim 12*, **characterized in*** that the opening implements (11) are opening discs (17) each connected to an arm (18) which is connected to the said beam (16) by means of a corresponding bracket (19), and in that between the said arm (18) and the bracket (19) of each opening disc (17) there is fitted a spring (20) which tends to keep the corresponding opening disc (17) in its lowermost position.

14. Seeder according to Claim 13, ***characterized in*** that the brackets (19) are identical and in that one in two is fixed to the beam (16) in the opposite direction to the direction of work (7) so that one opening disc (17) in two is offset in the direction of work (7).

15. Seeder according to Claim 13 or 14, ***characterized in*** that each bracket (19) is fixed to the beam (16) removably and in such a way that its position along the longitudinal axis of the said beam (16) can be altered.

16. Seeder according to at least one of Claims 1 to 15, ***characterized in*** that the carrying structure (28) connected to the rear chassis (14) includes connecting devices (41) each guiding a planting member (29) in such a way that each planting member (29) can be moved heightwise independently of the others.

17. Seeder according to Claim 16, ***characterized in*** that the carrying structure (28) includes a hitching structure (30) with a top hitching point (31) and with two bottom hitching points (32) by means of which it is connected to the rear chassis (14).

18. Seeder according to Claim 17, ***characterized in*** that the carrying structure (28) can be pivoted with respect to the rear chassis (14) about the said bottom hitching points (32) by means of an adjustment device (33).

19. Seeder according to Claim 18, ***characterized in*** that the adjustment device (33) is a screw and nut device extending between the top hitching point (31) of the said carrying structure (28) and the rear chassis (14).

20. Seeder according to at least one of Claims 16 to 19, ***characterized in*** that the carrying structure (28) includes a bar (38) extending horizontally and orthogonally to the direction of work (7) and to which each connecting device (41) is connected by means of a corresponding bracket (42).

21. Seeder according to Claim 20, ***characterized in*** that the said brackets (42) are identical and in that one in two is fixed to the bar (38) in the opposite direction to the direction of work (7) so that one planting member (29) in two is offset in the direction of work (7).

22. Seeder according to Claim 20 or 21, ***characterized in*** that each bracket (42) is fixed to the bar (38) removably and in such a way that its position along the longitudinal axis of the said bar (38) can be altered.

23. Seeder according to at least one of Claims 16 to 22, ***characterized in*** that each connecting device (41) includes at least substantially an upwardly deformable parallelogram.

24. Seeder according to at least one of Claims 16 to 23, ***characterized in*** that each connecting device (41) is equipped with an elastically deformable element (44) tending to return the corresponding planting member (29) to its lowermost position.

25. Seeder according to Claim 24, ***characterized in*** that the action of each elastically deformable element (44) on the corresponding planting member (29) is at least substantially constant irrespective of the heightwise movement of the said planting member (29).

26. Seeder according to Claim 25, ***characterized in*** that the action of each elastically deformable element (44) is exerted at least substantially horizontally.

27. Seeder according to at least one of Claims 24 to 26, ***characterized in*** that the action of the elastically deformable elements (44) is modified by means of a central adjustment device (47).

28. Seeder according to Claim 27, ***characterized in*** that each elastically deformable element (44) is a spring (45) connected directly or indirectly at one of its ends to a central adjustment rod (47) which can be moved in translation at least substantially in the direction of work (7).

29. Seeder according to at least one of Claims 24 to 28, ***characterized in*** that the action of each elastically deformable element (44) is modified initially by means of an individual adjustment device.

30. Seeder according to at least one of Claims 24 to 29, ***characterized in*** that each elastically deformable element (44) is a tension spring (45).

31. Seeder according to at least one of Claims 1 to 30, ***characterized in*** that each planting member (29) includes two sowing discs (39) placed in a V which is open at the back, and in that the seeds are deposited between the said sowing discs (39) by means of a pipe (49).

## Patentansprüche

1. Sämaschine (1) mit einem Körper (4) und einer Kupplungsdeichsel (3), die an ihrem vorderen Ende mittels eines Kugelgelenks (5) oder ähnlichen Gelenks mit einer Zugmaschine (2) verbunden werden soll, wobei der Körper (4) einen Rahmen (9), der Öffnungswerkzeuge (11) trägt und sich mittels Rädern (12), welche mittels Verbindungselementen (24) bezüglich des Rahmens (9) in der Höhe verschiebbar sind, auf den Boden aufstützt, sowie ein Traggestell (28) aufweist, das Elemente (29) zum Ablegen von Samen in den Boden trägt, wobei der Rahmen (9) einen vorderen Rahmen (13) und einen hinteren Rahmen (14) umfaßt, die mittels eines mittleren Gelenks (27) mit einer zumindest im wesentlichen vertikalen Achse aneinander angelenkt sind, wobei zwischen dem vorderen Rahmen (13) und dem hinteren Rahmen (14) angebrachte Mittel (35, 37) das Schwenken des einen bezüglich des anderen im Betrieb gestatten, wobei der vordere Rahmen (13) mit der Kupplungsdeichsel (3) verbunden ist und die Öffnungswerkzeuge (11) trägt, während der hintere Rahmen (14) die Elemente (29) zum Ablegen von Samen in den Boden trägt, ***dadurch gekennzeichnet,*** daß die Räder (12) mit dem vorderen Rahmen (13) verbunden sind und daß es sich bei den zwischen dem vorderen Rahmen (13) und dem hinteren Rahmen (14) angebrachten Mitteln (35, 37) um Verriegelungsmittel (35, 37) handelt, die beim Betrieb das freie Schwenken des hinteren Rahmens (14) bezüglich des vorderen Rahmens (13) gestatten und beim Transport jenes Schwenken verhindern.

2. Sämaschine nach Anspruch 1, ***dadurch gekennzeichnet,*** daß sich jedes Ablegeelement (29), von oben gesehen, zumindest im wesentlichen im gleichen Abstand zum mittleren Gelenk (27) erstreckt wie das dazugehörige Öffnungswerkzeug (11).

3. Sämaschine nach Anspruch 1 oder 2, ***dadurch gekennzeichnet,*** daß die Verbindungselemente (24) Radarme (25), die mittels eines Gelenks (120) mit einer zumindest im wesentlichen horizontalen und zur Arbeitsrichtung (7) orthogonalen Achse mit dem vorderen Rahmen (13) verbunden sind, sowie mindestens ein Betätigungsglied (26) aufweisen, das zwischen den Radarmen (25) und dem vorderen Rahmen (13) angebracht ist und zum Schwenken der Radarme (25) bezuglich des vorderen Rahmens (13) dient.

4. Sämaschine nach mindestens einem der Ansprüche 1 bis 3, ***dadurch gekennzeichnet,*** daß im Hinblick auf die Definition der unteren Arbeitsposition des Körpers (4) ein einstellbarer Anschlag (36') zwischen dem vorderen Rahmen (13) und mindestens einem der Radarme (25) angebracht ist.

5. Sämaschine nach mindestens einem der Ansprüche 1 bis 4, ***dadurch gekennzeichnet,*** daß die Räder (12) zwischen den Öffnungswerkzeugen (11) und den Elementen (29) zum Ablegen von Samen in den Boden angebracht sind.

6. Sämaschine nach mindestens einem der Ansprüche 1 bis 5, ***dadurch gekennzeichnet,*** daß die Verriegelungsmittel (35, 37) während der Plazierung des Körpers (4) in Transportposition automatisch das Schwenken des hinteren Rahmens (14) bezüglich des vorderen Rahmens (13) verhindern.

7. Sämaschine nach mindestens einem der Ansprüche 1 bis 6, ***dadurch gekennzeichnet,*** daß die Verriegelungsmittel (35, 37) während der Plazierung des Körpers (4) in Arbeitsposition automatisch das Schwenken des hinteren Rahmens (14) bezüglich des vorderen Rahmens (13) freigeben.

8. Sämaschine nach Anspruch 6 oder 7 in Kombination mit Anspruch 3, ***dadurch gekennzeichnet,*** daß zwischen den Radarmen (25) ein Querträger (36) angebracht ist, der sich mit ihnen zusammen bei ihrem Schwenken um die die Radarme (25) mit dem vorderen Rahmen (13) verbindende Gelenkachse (120) dreht, daß die Verriegelungsmittel (35, 37) Verriegelungselemente (35) und Anschläge (37) umfassen und daß die Verriegelungselemente (35) an dem Querträger (36) angebracht und dazu bestimmt sind, bei der Plazierung des Körpers (4) in Transportposition mit den an dem hinteren Rahmen (14) angebrachten Anschlägen (37) in Kontakt zu kommen.

9. Sämaschine nach Anspruch 8, ***dadurch gekennzeichnet,*** daß die Anschläge (37) einstellbar sind.

10. Sämaschine nach mindestens einem der Ansprüche 1 bis 9, ***dadurch gekennzeichnet,*** daß der vordere Rahmen (13) mittels eines Gelenks (6) mit einer zumindest im wesentlichen horizontalen und zur Arbeitsrichtung (7) orthogonalen Achse mit der Kupplungsdeichsel (3) verbunden ist und daß ein Steuerglied (8) das von dem Gelenk (6) gestattete Schwenken des vorderen Rahmens (13) bezuglich der Kupplungsdeichsel (3) steuert.

11. Sämaschine nach Anspruch 10 und Anspruch 8 oder 9, ***dadurch gekennzeichnet,*** daß das Steuerglied (8) derart zwischen der Kupplungsdeichsel (3) und dem Querträger (36) angebracht ist, daß es den vorderen Teil des vorderen Rahmens (13) anhebt, wenn der hintere Teil des letzteren mittels der Räder (12) angehoben wird, und umgekehrt den vorderen Teil des vorderen Rahmens (13) absenkt, wenn der hintere Teil des letzteren mittels der Räder (12) abgesenkt wird.

12. Sämaschine nach mindestens einem der Ansprüche 1 bis 11, ***dadurch gekennzeichnet,*** daß der vordere Rahmen (13) ein Gestell (15) aufweist, an dem ein sich horizontal und orthogonal zur Arbeitsrichtung (7) erstreckender Träger (16) befestigt ist und daß dieser Träger (16) die Öffnungswerkzeuge (11) trägt.

13. Sämaschine nach Anspruch 12, ***dadurch gekennzeichnet,*** daß es sich bei den Öffnungswerkzeugen (11) um Öffnungsscheiben (17) handelt, die jeweils mit einem Arm (18) verbunden sind, der mittels einer dazugehörigen Halterung (19) mit dem Träger (16) verbunden ist, und daß zwischen dem Arm (18) und der Halterung (19) jeder Öffnungsscheibe (17) eine Feder (20) angebracht ist, die dahingehend wirkt, die dazugehörige Öffnungsscheibe (17) in ihrer unteren Position zu halten.

14. Sämaschine nach Anspruch 13, ***dadurch gekennzeichnet,*** daß die Halterungen (19) identisch sind und daß jede zweite derart in einer der Arbeitsrichtung (7) entgegengesetzten Richtung an dem Träger (16) befestigt ist, daß jede zweite Öffnungsscheibe (17) in Arbeitsrichtung (7) versetzt ist.

15. Sämaschine nach Anspruch 13 oder 14, ***dadurch gekennzeichnet,*** daß jede Halterung (19) derart auf lösbare Weise an dem Träger (16) befestigt ist, daß ihre Position gemaß der Längsachse des Trägers (16) modifiziert werden kann.

16. Sämaschine nach mindestens einem der Ansprüche 1 bis 15, ***dadurch gekennzeichnet,*** daß das mit dem hinteren Rahmen (14) verbundene Traggestell (28) Verbindungsvorrichtungen (41) aufweist, die jeweils ein Ablegeelement (29) derart führen, daß sich jedes Ablegeelement (29) unabhängig von den anderen in der Höhe verschieben läßt.

17. Sämaschine nach Anspruch 16, ***dadurch gekennzeichnet,*** daß das Traggestell (28) eine Kupplungsvorrichtung (30) mit einem oberen Kupplungspunkt (31) und mit zwei unteren Kupplungspunkten (32) aufweist, mittels derer es mit dem hinteren Rahmen (14) verbunden wird.

18. Sämaschine nach Anspruch 17, ***dadurch gekennzeichnet,*** daß das Traggestell (28) mittels einer Einstellvorrichtung (33) bezuglich des hinteren Rahmens (14) um die unteren Kupplungspunkte (32) geschwenkt werden kann.

19. Sämaschine nach Anspruch 18, ***dadurch gekennzeichnet,*** daß es sich bei der Einstellvorrichtung (33) um eine Schrauben- und Mutternvorrichtung handelt, die sich zwischen dem oberen Kupplungspunkt (31) des Traggestells (28) und dem hinteren Rahmen (14) erstreckt.

20. Sämaschine nach mindestens einem der Ansprüche 16 bis 19, ***dadurch gekennzeichnet,*** daß das Traggestell (28) einen Längsträger (38) aufweist, der sich horizontal und orthogonal zur Arbeitsrichtung (7) erstreckt und mit dem jede Verbindungsvorrichtung (41) mittels einer dazugehörigen Halterung (42) verbunden ist.

21. Sämaschine nach Anspruch 20, ***dadurch gekennzeichnet,*** daß die Halterungen (42) identisch sind und daß jede zweite in einer der Arbeitsrichtung (7) entgegengesetzten Richtung derart mit dem Längsträger (38) verbunden ist, daß jedes zweite Ablegeelement (29) in Arbeitsrichtung (7) versetzt ist.

22. Sämaschine nach Anspruch 20 oder 21, ***dadurch gekennzeichnet,*** daß jede Halterung (42) auf lösbare Weise derart an dem Längsträger (38) befestigt ist, daß ihre Position gemaß der Längsachse des Längsträgers (38) modifiziert werden kann.

23. Sämaschine nach mindestens einem der Ansprüche 16 bis 22, ***dadurch gekennzeichnet,*** daß jede Verbindungsvorrichtung (41) zumindest im wesentlichen ein nach oben verformbares Parallelogramm aufweist.

24. Sämaschine nach mindestens einem der Ansprüche 16 bis 23, ***dadurch gekennzeichnet,*** daß jede Verbindungsvorrichtung (41) mit einem elastisch verformbaren Element (44) versehen ist, das dahingehend wirkt, das dazugehörige Ablegeelement (29) in Richtung auf seine untere Position zurückzubringen.

25. Sämaschine nach Anspruch 24, ***dadurch gekennzeichnet,*** daß die Wirkung jedes elastisch verformbaren Elements (44) auf das dazugehörige Ablegeelement (29) unabhängig von der Höhenverschiebung des Ablegeelements (29) zumindest im wesentlichen konstant ist.

26. Sämaschine nach Anspruch 25, ***dadurch gekennzeichnet,*** daß die Wirkung jedes elastisch verformbaren Elements (44) zumindest im wesentlichen horizontal erfolgt.

27. Sämaschine nach mindestens einem der Ansprüche 24 bis 26, ***dadurch gekennzeichnet,*** daß die Wirkung der elastisch verformbaren Elemente (44) mittels einer zentralen Einstellvorrichtung (47) eingestellt wird.

28. Sämaschine nach Anspruch 27, ***dadurch gekennzeichnet,*** daß es sich bei jedem elastisch verformbaren Element (44) um eine Feder (45) handelt, die an einem ihrer Enden direkt oder indirekt mit einem zentralen Einstellstab (47) verbunden ist, der zumindest im wesentlichen in Arbeitsrichtung (7) verschoben werden kann.

29. Sämaschine nach mindestens einem der Ansprüche 24 bis 28, ***dadurch gekennzeichnet,*** daß die Wirkung jedes elastisch verformbaren Elements (44) anfangs mittels einer unabhängigen Einstellvorrichtung eingestellt wird.

30. Sämaschine nach mindestens einem der Ansprüche 24 bis 29, ***dadurch gekennzeichnet,*** daß es sich bei jedem elastisch verformbaren Element (44) um eine Zugfeder (45) handelt.

31. Sämaschine nach mindestens einem der Ansprüche 1 bis 30, ***dadurch gekennzeichnet,*** daß jedes Ablegeelement (29) zwei Säscheiben (29) aufweist, die in Form eines nach hinten offenen "V" angeordnet sind, und daß die Samen mittels eines Rohrs (49) zwischen den Säscheiben (39) ausgebracht werden.
